# NEW EUROPEAN PATENT SPECIFICATION

(11) **EP 1 562 444 B2**
(45) Date of publication and mention of the opposition decision: **11.10.2017**
(45) Mention of the grant of the patent: 12.08.2009
(21) Application number: 03772318.6
(22) Date of filing: 07.11.2003
(51) Int. Cl.: A23L 5/10, A23L 19/18, C12N 15/00

(54) **PROCESS FOR REDUCING THE ACRYLAMIDE CONTENT OF HEAT-TREATED FOODS**
PROZESS ZUR VERMINDERUNG DES ACRYLAMIDGEHALTES VON HITZEBEHANDELTEN LEBENSMITTELN
PROCEDE DE REDUCTION DE LA TENEUR EN ACRYLAMIDE D'ALIMENTS THERMO-TRAITES

(30) Priority: 08.11.2002 EP 02025008; 21.02.2003 EP 03003235; 21.05.2003 EP 03090151
(43) Date of publication of application: 17.08.2005
(73) Proprietor: Bayer CropScience AG, 40789 Monheim am Rhein (DE)
(72) Inventor: SOYKA, Stephan, 12161 Berlin (DE); FROHBERG, Claus, 14532 Kleinmachnow (DE); QUANZ, Martin, 10997 Berlin (DE); ESSIGMANN, Bernd, 12157 Berlin (DE)
(74) Representative: Beyer, Andreas
(86) International application number: PCT/EP2003/012476
(87) International publication number: WO 2004/040999

(56) References cited:
- WO-A-01/20009
- STADLER R H ET AL: "Acrylamide from Maillard reaction products" NATURE, MACMILLAN JOURNALS LTD. LONDON, GB, vol. 419, 3 October 2002 (2002-10-03), pages 449-450, XP002237518 ISSN: 0028-0836 cited in the application
- MOTTRAM D S ET AL: "Acrylamide is formed in the Maillard reaction" NATURE, MACMILLAN JOURNALS LTD. LONDON, GB, vol. 419, 3 October 2002 (2002-10-03), pages 448-449, XP002237516 ISSN: 0028-0836 cited in the application
- ANONYMOUS: "Entstehung des Krebserregers Acrylamid in Pommes und Chips erkannt" INTERNET ARTICLE, [Online] 2 October 2002 (2002-10-02), XP002269721 Retrieved from the Internet: <URL:www.swisstox.net/de/news_d.php?st_lan g_key=de&st_news_id=948> [retrieved on 2004-02-10]
- ANONYMOUS: "Presse - Archiv" ARBEITSGRUPPE QUASI, [Online] 1 October 2002 (2002-10-01), pages 1-18, XP002269722 Retrieved from the Internet: <URL:www.quasi.uni-kiel.de/text/aktuelles_ archiv_2002.html> [retrieved on 2004-02-10]
- HAASE, N. U. ET AL: "Acrylamide formation in foodstuff - minimising strategies for potato crisps Minimierungsansatze zur Acrylamid-Bildung in pflanzlichen Lebensmitteln - aufgezeigt am Beispiel von Kartoffelchips" DEUTSCHE LEBENSMITTEL-RUNDSCHAU PUBLISHER: WISSENSCHAFTLICHE VERLAGSGESELLSCHAFT MBH. STUTTGART ISSN: 0012-0413, vol. 99, no. 3, March 2003 (2003-03), pages 87-90, XP009025652
- SHARP D: "Acrylamide in food" LANCET THE, LANCET LIMITED. LONDON, GB, vol. 361, no. 9355, 1 February 2003 (2003-02-01), pages 361-362, XP004405476 ISSN: 0140-6736
- LORBERTH R ET AL.: "Inhibition of a starch-granule-bound protein leads to modified starch and repression of cold sweetening" NATURE BIOTECHNOLOGY, vol. 16, May 1998 (1998-05), pages 473-477,

## Description

The present invention relates to a process for reducing the acrylamide content of heat-treated foods, compared with conventional heat-treated foods.

Recently, the Swedish National Food Administration (NFA) and scientists from Stockholm University have published new research results according to which, in various foods which are given a high heat treatment on preparation, acrylamide, a toxic and possibly carcinogenic substance, is formed. The NFA informed other national and international authorities and organizations in order to stimulate international collaboration and research, since acrylamide formation on heating foods is obviously a widespread phenomenon. Then, in summer 2002, in Geneva, an expert consultation took place which had been convened jointly by the Food and Agriculture Organization of the United Nations (FAO) and the World Health Organization (WHO) (WHO, FAO/WHO Consultation on the Health Implications of Acrylamide in Food (Geneva, 25-27 June 2002).

The expert consultation discussed the following as essential end points of the toxicological effects of acrylamide: neurotoxicity, reproductive toxicity, mutagenicity and carcinogenicity.

In particular, the expert consultation started from the position that the genotoxic potential of acrylamide and its metabolic product glycidamide plays an important role. In vivo, acrylamide is genotoxic in somatic cells and in germ cells. It can therefore cause inheritable damage at the level of the genes and also the chromosomes. As is known, one of its metabolic products is glycidamide, a chemically reactive epoxide, which can react directly with DNA and form adducts. It has been stressed that genotoxic mechanisms play the important role in the carcinogenicity of acrylamide.

The expert consultation assessed the available data from studies on laboratory animals. The consultation stressed especially the importance of genotoxic mechanisms of carcinogenesis and was of the opinion that to date, scarcely any evidence had been provided for additional alternative mechanisms, for example of a hormonal nature. The international expert consultation describes the carcinogenic potency of acrylamide in rats as comparable to that of other carcinogenic substances occurring in certain foods, in part depending on preparation, for example benzopyrene. However, acrylamide is the said to occur at higher contents than all other carcinogenic substances found to date in foods. For humans, the relative potency of carcinogenic substances in foods is unknown. The data from epidemiological studies of workers exposed at work are of lesser importance, since they are not all suitable for determining small changes in the risk of cancer. Overall, the expert consultation assessed the presence of acrylamide in foods as causing concern.

On the bases of the available data, the WHO/FAO expert consultation came to the conclusion that foods make an important contribution to exposure of consumers.

Acrylamide is formed when certain foods are prepared at relatively high temperatures. In addition to the high temperature, the duration of exposure to high temperatures plays a part. The international expert consultation did not find any other reliable evidence for the mechanism formation. The mechanisms of acrylamide formation, according to the expert consultation, are still not understood.

Under certain experimental conditions, acrylamide appears to form in vitro in the reaction of amino acids, in particular asparagine (Mottram et al., Nature 419, (2002), 448; Stadler et al., Nature 419, (2002), 449) with sugars, for example fructose, galactose, lactose or sucrose (Stadler et al., Nature 419, (2002), 449).

The causes of the variability in acrylamide contents in heat-treated foods are not yet sufficiently understood (WHO, FAO/WHO Consultation on the Health Implications of Acrylamide in Food (Geneva, 25-27 June 2002)).

The international expert consultation convened by the FAO and the WHO recommended study of the relationship between processing conditions of foods and the formation of acrylamide, and also the optimization of processing conditions with the aim of minimizing acrylamide contents.

Processes for minimizing acrylamide contents in heat-treated foods have not yet been described to date in the prior art and are urgently required.
The object therefore underlying the present invention is to provide processes which permit the production of heat-treated foods which, compared with conventional heat-treated foods, have a reduced acrylamide content.

This object is achieved by the provision of the embodiments described in the patent claims.

The present invention therefore relates to a process for reducing the acrylamide content of heat-treated foods compared with corresponding conventional heat-treated foods comprising :
(a) selecting genetically modified plant material originating from potato plants, wherein the genetic modification leads to a reduction in the content of soluble sugars, compared with corresponding non-genetically modified plant material from wild type plants, and wherein said genetic modification leads to a reduction in the activity of one or more endogenous R1 proteins occurring in the plant cell compared with corresponding plant cells of wild type plants which have not been genetically modified;
(b) processing the said plant material to give a food; and
(c) heat-treating the food produced in process step b), wherein the food is heat-treated by grilling, roasting, extruding, baking or microwave heating.
Acrylamide (CAS number 79-06-1), which is also called 2-propenamide, vinylamide or ethylenecarboxamide, is a solid colourless at room temperature which is very soluble in water but insoluble in heptane.
The term "reduction in acrylamide content", in the context of the present invention, is to be taken to mean the reduction of the acrylamide content by at least 15%, in particular by at least 30%, preferably by at least 50%, 75% and particularly preferably by at least 90%, compared with the acrylamide content of corresponding conventional heat-treated foods.

Methods of determining the acrylamide content of foods have been described, for example, in Tareke et al. (J. Agric. Food Chem. 50, (2002), 4998-5006). The acrylamide was determined quantitatively by GC/MS after derivatization (e.g. to form the dibromo product), or by LC/MS-MS, preferably by LC/MS-MS as described by Tareke et al. (J. Agric. Food Chem. 50, (2002), 4998-5006). Derivatization to form the dibromo product can be carried out, for example, as in EPA method 8032A (http://www.epa.gov/epaoswer/hazwaste/test/pdfs/8032a.pdf, December 1996 version, "Acrylamide by gas chromatography") of the US Environmental Protection Agency (= EPA). In the context of the present invention the derivatization is preferably carried out according to EPA method 8032A.

The term "food", in the context of the present invention, is to be taken to mean any food which contains plant material originating from potato plants. The term comprises, in particular, preliminary stages, for example dough mixtures, potato slices, potato strips, which are suitable for producing "heat-treated foods". The preliminary stages, in particular potato slices, for producing the heat-treated foods may also be present in the precooked or blanched form or frozen form.

The term "heat-treated food", in the context of the present invention, is to be taken to mean any food which has been exposed to temperatures of > 100°C, preferably of 110°C to 230°C, in particular 120°C-200°C, preferably of 150°C-170°C, particularly preferable 150°C-180°C. The term "heat treatment", in the context of the present invention, is to be taken to mean any treatment which, under standard pressure conditions, leads to temperatures of above 100°C, it is to be taken to mean grilling, roasting, extruding, baking or microwave heating,

The heat treatment time can differ depending on the food. The absolute acrylamide contents always increase with the heat treatment time. With the aid of the present invention it is now possible to lower the acrylamide content of a food which has been heat-treated at a defined temperature for a defined time by a defined method, compared with conventional heat-treated foods.

In the context of the present invention, for one to 120 minutes, preferably for 5 to 30 minutes.

Preferably, the moisture content is determined as described in International Patent Application WO 97/40707 A1 on page 14.

Examples of such "heat-treated foods" are potato crisps (synonymous to this English term is the American term "potato chip"), (potato) chips (synonymous to this English term is the American term "French fry"), mashed potato, and potato sticks.
In the context of the present invention the English terms "potato crisp" and "potato chips" are used instead of the synonymous American terms "potato chips" and "French fry".

The term "conventional heat-treated food", in the context of the present invention, is to be taken to mean a food which has been produced from conventional plant material. The term "corresponding conventional heat-treated food", in the context of the present invention, preferably relates to a heat-treated food which has been produced from conventional plant material which has been processed and heat-treated in the same manner as the plant material to be used according to the invention which, compared with corresponding conventional plant material, however, has a reduced content of soluble sugars and/or amino acids, owing to a genetic modification.

The term "plant material", in the context of the present invention, is to be taken to mean any material originating from potato plants which consists of potato plants or comprises parts of potato plants. Preferably, the said parts of plants are harvested tubers of potato plants.

The term "conventional plant material", in the context of the present invention, is to be taken to mean, in particular, plant material of corresponding non-genetically-modified plants, that is to say of plants which do not have a genetic modification which leads to a reduction in the content of soluble sugars, in particular glucose and/or fructose, and/or to a reduction in the content of amino acids, in particular asparagine, compared with corresponding wild type plants. Conventional plant material, in the context of the present invention, however, can also originate from genetically modified plants which have been genetically modified in another aspect, but where the genetic modification does not lead to a reduction in the content of soluble sugars, in particular glucose and/or fructose, and/or to a reduction in the content of amino acids, in particular asparagine, compared with corresponding wild type plants.

The term "genetic modification" is defined hereinafter.

The term "soluble sugars", in the context of the present invention, is to be taken to mean any water-soluble sugars occurring in plant material, preferably the soluble sugars are hexoses, preferably reducing sugars, in particular fructose and/or glucose.

The term "reducing the content of soluble sugars" or "reduced content of soluble sugars", in the context of the present invention, is to be taken to mean reducing the content of soluble sugars, preferably to mean reducing the content of soluble sugars of the plant material, in particular fructose and/or glucose, by at least 10%, in particular by at least 15%, preferably by at least 20%, and particularly preferably by at least 40%, in particular by 50%-95%, preferably by 60%-90% compared with the content of soluble sugars, in particular fructose and/or glucose, of corresponding conventional heat-treated foods or of corresponding conventional plant material.

The term "amino acid", in the context of the present invention, is to be taken to mean any amino acid occurring in plant material, preferably alanine, arginine, aspartic acid, cysteine, glutamine, methionine, threonine and valine, more preferably asparagine.

The term "reducing the content of amino acids" or "reduced content of amino acids", in the context of the present invention, is to be taken to mean reducing the content of amino acids, preferably to mean reducing the content of amino acids of the plant material, in particular asparagine, by at least 10%, in particular by at least 15%, preferably by at least 20%, and particularly preferably by at least 40%, compared with the content of amino acids, in particular asparagine, of corresponding conventional heat-treated foods or of corresponding conventional plant material.

The causes of the variability of acrylamide content in heat-treated foods are not yet adequately understood (WHO, FAO/WHO Consultation on the Health Implications of Acrylamide in Food (Geneva, 25-27 June 2002), so that to date no processes for minimizing acrylamide contents of heat-treated foods have been described. In particular, no processes were described which have the selection of particular plant materials as their basis.

It has now surprisingly been found that the choice of the starting plant material from potato plants which is used to produce heat-treated foods has a critical effect on the acrylamide content of such foods. The invention teaches for the first time that the use of plant material which, compared with corresponding conventional plant material, has a reduced content of soluble sugars and/or amino acids permits the production of foods which, after heat treatment, have a lower acrylamide content than in the case of the use of plant material having conventional contents of soluble sugars and/or amino acids. The present invention therefore teaches, to avoid the formation of acrylamide in heat-treated foods, to use plant material which has a comparatively low content of soluble sugars and/or amino acids.

Methods of determining the content of sugars, in particular fructose and glucose, in plant material are known to those skilled in the art and are described, for example, in Müller-Röber et al. (Mol. Gen. Genet. 224, (1990), 136-146) and also in the text which follows. In context with the present invention, the determination of the content of glucose, fructose and/or sucrose is preferably performed as described below ("Determination of glucose, fructose and sucrose").

Methods of determining the content of amino acids, in particular asparagine, in plant material are known to those skilled in the art and are described, for example, in Cohen, Meys, Tarvin (1988), The pico-tag method: A Manual of advanced techniques for amino acid analysis, Millipore Corporation, Milford, Mass., USA. Preferred is the method described by Roessner et al. (Plant Physiology 127, (2001), 749-764).

The plant material used is characterized in that it is genetically modified, the genetic modification leading to a reduction in the content of soluble sugars, in particular glucose and/or fructose, compared with corresponding conventional plant material of wild type plants.

The genetic modification leads to a reduction in the activity of one or more endogenous R1 proteins occurring in the plant cell, compared with corresponding plant cells of wild type plants which have not been genetically modified.

The term "R1 protein", in the context of the present invention, is to be taken to mean proteins which have been described, for example, in Lorberth et al. (Nature Biotech. 16, (1998), 473-477), Ritte et al., (PNAS 99, (2002), 7166-7171) and in the international patent applications WO98/27212, WO00/77229, WO00/28052 and have the characteristics below. Important characteristics of R1 proteins are i) their amino acid sequence (see, for example, GenBank Acc. No. A61831, Y09533); ii) their localization in the plastids of plant cells; iii) their ability to affect the degree of phosphorylation of the starch in plants. Further, the term "R1 protein" refers to a protein catalysing the phosphorylation of starch in a dikinase-type reaction in which three substrates, an α-polyglucan, ATP and H₂O are converted into three products, an α-polyglucan-P, AMP and orthophosphate (Ritte et al., PNAS Vol. 99 No. 10, (2002), 7166-7171). A synonym, which is used in the more recent literature for the term "R1 protein", is the term "GWD protein" which is the abbreviation for "alpha-glucan water dikinase" (Blennow et al., Trends in Plant Science Vol. 7 No. 10 (2002), 445-450). Therefore, with respect to the present invention, the term "R1 protein" comprises also "GWD proteins".
For example, inhibiting the R1 gene coding for an R1 protein from potatoes leads, in transgenic potato plants, to a reduction in the phosphate content of the starch which can be isolated from the potato tubers. Moreover, Lorberth et al. show that the R1 protein from *Solanum tuberosum* is able to phosphorylate bacterial glycogen when the corresponding R1 cDNA is expressed in E. coli (Lorberth et al., Nature Biotech. 16, (1998), 473-477).
Ritte et al. (Plant J. 21, (2000), 387-391) showed that the R1 protein from *Solanum tuberosum* in potato plants reversibly binds to starch granules, with the strength of the binding to the starch granule being dependent on the metabolic status of the plant. In the form bound to starch granules, the protein in potato plants is principally present in leaves which have been grown in the dark. After illuminating the leaves the protein, in contrast, is principally present in the soluble form which is not bound to the starch granule.

In the context of the present invention, it is of particular importance that inhibiting the expression of the potato R1 gene in transgenic potato plants or their tubers leads to a reduction of what is termed cold-induced sweetenings (Lorberth et al., Nature Biotech. 16, (1998), 473-477), that is to say cold-stored potato tubers, compared with tubers of corresponding wild type plants which are not genetically modified, have a reduced content of soluble sugars, in particular fructose and glucose.
In addition, the potato tubers of these transgenic plants having reduced R1 gene expression, even immediately after harvest, or after storage at room temperature, compared with tubers of corresponding wild type plants which are not genetically modified, have a reduced content of soluble sugars, in particular fructose and glucose.

It has been demonstrated for the first time that deep-fat frying or parfrying of (cold-stored) potato tubers which originate from plants having reduced R1 gene expression (Lorberth et al., Nature Biotech. 16, (1998), 473-477), leads to a markedly reduced acrylamide formation in the deep-fat-fried products than when corresponding potato tubers which have not been genetically modified are deep-fat fried. The reduction in acrylamide formation is surprisingly high.

The term "reduction in activity", in the context of the present invention, means a reduction compared with corresponding non genetically-modified cells in the expression of endogenous genes which code for R1 proteins and/or a reduction of the amount of R1 protein protein in the cells of the plant material and/or a reduction in the enzymatic activity of the R1 proteins in the cells of the plant material.

The term "reduction in the activity of one or more endogenous R1 proteins occurring in the plant cell", in the context of the present invention, is to be taken to mean a reduction in the expression of one or more endogenous genes which code for R1 proteins, and/or a reduction in the amount of R1 protein in the cells of the plant material and/or a reduction in the enzymatic activity of the R1 proteins in the cells of the plant material compared with corresponding non genetically-modified cells of wildtype plants.

The reduction in expression can be determined, for example, by measuring the amount of transcripts coding for R1 protein, for example by Northern blot analysis or RT-PCR. A reduction preferably means a reduction in the amount of transcripts compared with the corresponding non genetically-modified cells by at least 50%, in particular by at least 70%, preferably by at least 85%, and particularly preferably by at least 95%.

The reduction in the amount of R1 proteins which results in a reduced activity of these proteins in the plant cells in question can be determined, for example, by immunological methods, such as Western blot analysis, ELISA (Enzyme Linked Immuno Sorbent Assay) or RIA (Radio Immune Assay). A reduction preferably means a reduction in the amount of R1 protein compared with the corresponding non genetically-modified cells by at least 50%, in particular by at least 70%, preferably by at least 85%, and particularly preferably by at least 95%.

The reduction in the enzymatic activity of the R1 protein can be determined on the basis of an enzymatic assay described by Ritte et al. (PNAS 99, (2002), 7166-7171).

A reduction in the enzymatic activity of the R1 protein preferably means a reduction in activity compared with corresponding non genetically-modified cells by at least 50%, in particular by at least 60%, and preferably by at least 70%.

A reduction in the enzymatic activity of the R1 protein preferably means a seduction in activity of R1 compared with R1 activity of corresponding non genetically-modified cells by at least 50%, in particular by at least 60%, and preferably by at least 70%.

In a further embodiment of the inventive process, the genetic modification is the introduction of one or more foreign nucleic acid molecules, the presence and/or expression of which leads to the reduction in the activity of one or more endogenous R1 proteins occurring in the plant cell compared with corresponding plant cells of wild type plants which have not been genetically modified.

The term "foreign nucleic acid molecule" or "foreign nucleic acid molecules", in the context of the present invention, is to be taken to mean a molecule which either does not occur naturally in corresponding plant cells, or which does not occur naturally in the plant cells in the specific spatial arrangement or which is localized at a site in the genome of the plant cell at which it does not naturally occur. Preferably, the foreign nucleic acid molecule is a recombinant molecule which consists of various elements, the combination or specific spatial arrangement of which does not occur naturally in plant cells.

In a further preferred embodiment of the inventive process, the foreign nucleic acid molecule is selected from the group consisting of
(a) DNA molecules which code for at least one antisense RNA causing a reduction in expression of endogenous genes which code for R1 proteins;
(b) DNA molecules which, via a cosuppression effect, lead to reduction of the expression of endogenous genes coding for R1 proteins;
(c) DNA molecules which code for at least one ribozyme which cleaves in a specific manner transcripts of endogenous genes coding for R1 proteins;
(d) nucleic acid molecules which are introduced by means of in vivo mutagenesis and lead to a mutation or insertion of a heterologous sequence in genes coding for endogenous R1 proteins, the mutation or insertion causing a reduction in the expression of the said genes or the synthesis of inactive R1 proteins;
(e) DNA molecules which simultaneously code for at least one antisense RNA and at least one sense RNA, the said antisense RNA and the said sense RNA forming a double-stranded RNA molecule which causes a reduction in the expression of endogenous genes coding for R1 proteins;
(f) DNA molecules which contain transposons, the integration of the transposon sequences leading to a mutation or an insertion in endogenous genes coding for R1 proteins which causes a reduction in the expression of the said genes or the synthesis of inactive R1 proteins; and
(g) T-DNA molecules which, via insertion in endogenous genes coding for R1 protein cause a reduction in the expression of genes coding for R1 protein or the synthesis of inactive R1 proteins.

To inhibit the gene expression by means of antisense or cosuppression techniques, for example, a DNA molecule can be used which comprises the entire sequence coding for an R1 protein protein and possibly existing flanking sequences, and also DNA molecules which comprise only part of the coding sequence, with these parts needing to be long enough to cause an antisense effect or cosuppression effect in the cells. Suitable sequences are generally sequences up to a minimum length of 15 bp, preferably a minimum length of 21 bp, preferably a length of 100-500 bp, and for an efficient antisense or cosuppression inhibition, particular preference is given to sequences having a length over 500 bp. These statements apply correspondingly to the inhibition of BE I gene expression.

For antisense or cosuppression approaches, it is also suitable to use DNA sequences which have a high degree of homology to the endogenous sequences in the plant cell which code for an R1 protein. The minimum homology should be greater than approximately 65%. The use of sequences having homologies of at least 90%, in particular between 95 and 100%, is to be preferred. These statements apply correspondingly to the inhibition of BE I gene expression.

In addition, to achieve an antisense or cosuppression effect, the use of introns is also conceivable, that is to say non-coding regions of genes which code for an R1 protein protein. The use of intron sequences for inhibiting gene expression of genes which code for proteins of starch biosynthesis has been described, for example, in the international patent applications WO97/04112, WO97/04113, WO98/37213, WO98/37214. These statements apply correspondingly to the inhibition of BE I gene expression.

A person skilled in the art is familiar with how to achieve an antisense and cosuppression effect. The process of cosuppression inhibition has been described, for example, in Jorgensen (Trends Biotechnol. 8 (1990), 340-344), Niebel et al., (Curr. Top. Microbiol. Immunol. 197 (1995), 91-103), Flavell et al. (Curr. Top. Microbiol. Immunol. 197 (1995), 43-46), Palaqui and Vaucheret (Plant. Mol. Biol. 29 (1995), 149-159), Vaucheret et al., (Mol. Gen. Genet. 248 (1995), 311-317), de Borne et al. (Mol. Gen. Genet. 243 (1994), 613-621).

The expression of ribozymes for reducing activity of certain enzymes in cells is also known to those skilled in the art and is described, for example, in EP-B1 0321201. The expression of ribozymes in plant cells has been described, for example, in Feyter et al. (Mol. Gen. Genet. 250, (1996), 329-338).

In addition, the reduction of the R1 activity in the plant cells of the plant material can also be achieved by "in-vivo mutagenesis", in which, by transformation of cells, a hybrid RNA-DNA oligonucleotide ("chimeroplast") is introduced into cells (Kipp, P.B. et al., Poster Session at the 5th International Congress of Plant Molecular Biology, 21.-27. September 1997, Singapore; R. A. Dixon and C.J. Arntzen, Meeting report on "Metabolic Engineering in Transgenic Plants", Keystone Symposia, Copper Mountain, CO, USA, TIBTECH 15, (1997), 441-447; international patent application WO 9515972; Kren et al., Hepatology 25, (1997), 1462-1468; Cole-Strauss et al., Science 273, (1996), 1386-1389; Beetham et al., (1999), PNAS 96, 8774-8778).
A part of the DNA component of the RNA-DNA oligonucleotide is homologous to a nucleic acid sequence of an endogenous R1 gene, but, compared therewith, has a mutation or contains a heterologous region which is enclosed by the homologous regions.
By base-pairing the homologous regions of the RNA-DNA oligonucleotide and of the endogenous nucleic acid molecule, followed by homologous recombination, the mutation or heterologous region present in the DNA component of the RNA-DNA oligonucleotide can be transferred into the genome of a plant cell. This leads to a reduction in activity of one or more R1 proteins. These statements apply correspondingly to the inhibition of BE I gene expression.

In addition, the R1 activity can also be reduced in the plant cells by the simultaneous expression of sense and antisense RNA molecules of the respective target gene to be repressed, preferably of the R1 gene.

This can be achieved, for example, by using chimeric constructs which contain inverted repeats of the respective target gene or parts of the target gene. In this case the chimeric constructs code for sense and antisense RNA molecules of the respective target gene. Sense and antisense RNA are synthesized *in planta* simultaneously as one RNA molecule, with sense and antisense RNA being separated from one another by a spacer and able to form a double-stranded RNA molecule. This technology is also called "RNAi technology".
It has been shown that introducing inverted repeat DNA constructs into the genome of plants is a highly efficient method for repressing the genes corresponding to the inverted repeat DNA constructs (Waterhouse et al., Proc. Natl. Acad. Sci. USA 95, (1998), 13959-13964; Wang and Waterhouse, Plant Mol. Biol. 43, (2000), 67-82; Singh et al., Biochemical Society Transactions Vol. 28 part 6 (2000), 925- 927; Liu et al., Biochemical Society Transactions Vol. 28 part 6 (2000), 927-929); Smith et al., (Nature 407, (2000), 319-320; international patent application WO99/53050 A1). Sense and antisense sequences of the target gene or the target genes can also be expressed separately from one another by means of the same or different promoters (Nap, J-P et al, 6th International Congress of Plant Molecular Biology, Quebec, 18-24 June, 2000; Poster S7-27, Presentation Session S7). These statements apply correspondingly to the inhibition of BE I gene expression.

The reduction in R1 activity in the plant cells of the plant material can thus also be achieved by producing double-stranded RNA molecules of R1 genes. Preferably, for this purpose, inverted repeats of DNA molecules of R1 genes or cDNAs are introduced into the genome of plants, the DNA molecules to be transcribed (R1 genes or cDNAs or fragments of these genes or cDNAs) being under the control of a promoter which controls the expression of the said DNA molecules. These statements apply correspondingly to the inhibition of BE I gene expression.

Furthermore it is known that the formation of double-stranded RNA molecules of promoter DNA molecules in plants *in trans* can lead to a methylation and a transcriptional inactivation of homologous copies of these promoters which are to be termed hereinafter target promoters (Mette et al., EMBO J. 19, (2000), 5194-5201). Via the inactivation of the target promoter it is thus possible to reduce the gene expression of a certain target gene (for example R1 gene) which exists naturally under the control of this target promoter.
That is to say the DNA molecules which comprise the target promoters of the genes to be repressed (target genes) are in this case, in contrast to the original function of promoters in plants, used not as control elements for the expression of genes or cDNAs, but are themselves used as transcribable DNA molecules.
To produce the double-stranded target promoter RNA molecules *in planta* which can be present there as RNA hairpin molecules, preferably, constructs are used which contain inverted repeats of the target promoter DNA molecules, the target promoter DNA molecules being under the control of a promoter which controls the gene expression of the said target promoter DNA molecules. These constructs are then introduced into the genome of plants. The expression of the "inverted repeats" of the said target promoter DNA molecules leads *in planta* to the formation of double-stranded target promoter RNA molecules (Mette et al., EMBO J. 19, (2000), 5194-5201). By this means the target promoter can be inactivated.
The reduction in R1 activity in the plant cells can thus also be achieved by producing double-stranded RNA molecules of promoter sequences of R1 genes. Preferably, for this purpose, inverted repeats of promoter DNA molecules of R1 promoters are introduced into the genome of plants, the target promoter DNA molecules to be transcribed (R1 promoter) being under the control of a promoter which controls the expression of the said target promoter DNA molecules. These statements apply correspondingly to the inhibition of BE I gene expression.

In a further embodiment of the present invention, the foreign nucleic acid molecule is inserted transposons or what is called transfer DNA (T-DNA) into a gene coding for an R1 protein, the activity of the said proteins being reduced as a result in the relevant cell of the plant material. These statements apply correspondingly to the inhibition of BE I gene expression.

In principle, the plant material suitable for the inventive process can be produced not only using homologous, but also heterologous, transposons, the use of homologous transposons also being taken to mean those which are already naturally present in the plant genome. These statements apply correspondingly to the inhibition of BE I gene expression.

Modifying gene expression by means of transposons is known to those skilled in the art. A review of the use of endogenous and heterologous transposons as tools in plant biotechnology is given in Ramachandran and Sundaresan (2001, Plant Physiology and Biochemistry 39, 234-252). The possibility of identifying mutants in which specific genes have been inactivated by transposon insertion mutagenesis is described in a review by Maes et al. (1999, Trends in Plant Science 4 (3), 90-96). Producing rice mutants with the aid of endogenous transposons is described by Hirochika (2001, Current Opinion in Plant Biology 4, 118-122). The identification of maize genes using endogenous retrotransposons is reported, for example, by Hanley et al. (2000, The Plant Journal 22 (4), 557-566). The possibility of producing mutants using retrotransposons and methods for identifying mutants are described by Kumar and Hirochika (2001, Trends in Plant Science 6 (3), 127-134). The activity of heterologous transposons in different species has been described not only for dicotyledonous but also for monocotyledonous plants: e.g. for rice (Greco et al., 2001, Plant Physiology 125, 1175-1177; Liu et al., 1999, Molecular and General Genetics 262, 413-420; Hiroyuki et al., 1999, The Plant Journal 19 (5), 605-613; Jeon and Gynheung, 2001, Plant Science 161, 211-219), barley (2000, Koprek et al., The Plant Journal 24 (2), 253-263) *Arabidopsis thaliana* (Aarts et al., 1993, Nature 363, 715-717, Schmidt and Willmitzer, 1989, Molecular and General Genetics 220, 17-24; Altmann et al., 1992, Theoretical and Applied Genetics 84, 371-383; Tissier et al., 1999, The Plant Cell 11, 1841-1852), tomato (Belzile and Yoder, 1992, The Plant Journal 2 (2), 173-179) and potatoes (Frey et al., 1989, Molecular and General Genetics 217, 172-177; Knapp et al., 1988, Molecular and General Genetics 213, 285-290).

T-DNA insertion mutagenesis is based on the fact that certain sections (T-DNA) of Ti-plasmids from *Agrobacterium* can integrate into the genome of plant cells. The site of integration in the plant chromosome is not fixed here, that can be at any desired position. If the T-DNA integrates into a section of the chromosome representing a gene function, this can lead to a modification of gene expression and thus also to a change in the activity of a protein coded for by the gene in question. In particular, the integration of a T-DNA into the coding region of a protein frequently leads to the corresponding protein no longer being able to be synthesized by the cell in question, or not in active form. The use of T-DNA insertions for producing mutants is described, for example, for *Arabidopsis thaliana* (Krysan et al., 1999, The Plant Cell 11, 2283-2290; Atipiroz-Leehan and Feldmann, 1997, Trends in genetics 13 (4), 152-156; Parinov and Sundaresan, 2000, Current Opinion in Biotechnology 11, 157-161) and rice (Jeon and An, 2001, Plant Science 161, 211-219; Jeon et al., 2000, The Plant Journal 22 (6), 561-570). Methods for identifying mutants which have been produced using T-DNA insertion mutagenesis are described, inter alia, by Young et al.,(2001, Plant Physiology 125, 513-518), Parinov et al. (1999, The Plant cell 11, 2263-2270), Thorneycroft et al. (2001, Journal of Experimental Botany 52, 1593-1601), and McKinney et al. (1995, The Plant Journal 8 (4),613-622).

T-DNA mutagenesis is suitable in principle for producing the plant material which can be used in the inventive process.

In a further embodiment of the inventive process, the genetic modification not only leads to a reduction in the activity of one or more endogenous R1 proteins occurring in the plant cell, but also at the same time to a reduction in the activity of one or more endogenous branching enzymes of isoform I occurring in the plant cell (branching enzyme I = BEI protein), compared with corresponding non-genetically-modified plant cells of wild type plants.

The term "BEI protein", in the context of the present invention, is to be taken to mean a branching enzyme (= BE) of isoform I. Preferably the BEI protein originates from potato plants.
The naming of the isoforms here is based on the nomenclature proposed by Smith-White and Preiss (Smith-White and Preiss, Plant Mol Biol. Rep. 12, (1994), 67-71, Larsson et al., Plant Mol Biol. 37, (1998), 505-511). This nomenclature starts from the position that all enzymes which have a higher homology (identity) at the amino acid level to the BEI protein from maize (GenBank Acc. No. D11081; Baba et al., Biochem. Biophys. Res. Commun. 181 (1), (1991), 87-94; Kim et al. Gene 216, (1998), 233-243) than to the BEII protein from maize (Genbank Acc. No AF072725, U65948), are called branching enzyme of isoform I, or for short BEI proteins.

Nucleic acid molecules coding for "BEI protein" have been described for numerous plants, for example for maize (Genbank Acc. No. D 11081, AF 072724), rice (Genbank Acc. No. D11082), peas (Genbank Acc. No. X80010) and potatoes. Various forms of the BEI gene and of the BEI protein from potatoes have been described, for example, in Khoshnoodi et al., Eur. J. Biochem. 242(1), 148-155 (1996), Genbank Acc. No. Y 08786 and in Kossmann et al., Mol. Gen. Genet. 230, (1991), 39-44). In potato plants, the BEI gene is principally expressed in the tubers and scarcely at all in the leaves (Larsson et al., Plant Mol. Biol. 37, (1998), 505-511).

Regarding the genetic modification which leads to a reduction in the R1 activity, the statements made above apply. The genetic modification which leads to a reduction in the activity of the BEI protein I (branching enzyme I), can be the introduction of one or more foreign nucleic acid molecules, the presence and/or expression of which leads to the reduction in the activity of one or more endogenous BEI proteins of isoform I occurring in the plant cell compared with corresponding non-genetically-modified plant cells of wild type plants.

The term "reduction in the activity of one or more endogenous branching enzymes of isoform I occurring in the plant cell", in the context of the present invention, is to be taken to mean a reduction compared with corresponding non genetically-modified cells in the expression of one or more endogenous genes which code for BEI proteins, and/or a reduction in the amount of BEI protein in the cells of the plant material and/or a reduction in the enzymatic activity of the BEI proteins in the cells of the plant material.

The reduction in expression can be determined, for example, by measuring the amount of transcripts coding for BEI protein, for example by Northern blot analysis or RT-PCR. A reduction preferably means a reduction in the amount of transcripts compared with the corresponding non genetically-modified cells by at least 50%, in particular by at least 70%, preferably by at least 85%, and particularly preferably by at least 95%.

The reduction in the amount of BEI proteins which results in a reduced activity of this protein in the plant cells in question can be determined, for example, by immunological methods, such as Western blot analysis, ELISA (Enzyme Linked Immuno Sorbent Assay) or RIA (Radio Immune Assay). A reduction preferably means a reduction in the amount of BEI protein compared with the corresponding non genetically-modified cells by at least 50%, in particular by at least 70%, preferably by at least 85%, and particularly preferably by at least 95%.

In a further preferred embodiment of the inventive process, the foreign nucleic acid molecule which leads to the reduction in activity of one or more endogenous BEI proteins of isoform I occurring in the plant cell is selected from the group consisting of
(a) DNA molecules which code for at least one antisense RNA causing a reduction in the expression of endogenous genes which code for BEI proteins;
(b) DNA molecules which, via a cosuppression effect, lead to reduction in the expression of endogenous genes which code for BEI proteins;
(c) DNA molecules which code for at least one ribozyme which cleaves in a specific manner transcripts of endogenous genes coding for BEI proteins;
(d) nucleic acid molecules which are introduced by means of in vivo mutagenesis and lead to a mutation or insertion of a heterologous sequence in genes coding for endogenous BEI proteins, the mutation or insertion causing a reduction in the expression of the said genes or the synthesis of inactive BEI proteins;
(e) DNA molecules which simultaneously code for at least one antisense RNA and at least one sense RNA, the said antisense RNA and the said sense RNA forming a double-stranded RNA molecule which causes a reduction in the expression of endogenous genes coding for BEI proteins;
(f) DNA molecules which contain transposons, the integration of the transposon sequences leading to a mutation or insertion in endogenous genes coding for BEI proteins which causes a reduction in the expression of the said genes or the synthesis of inactive BEI proteins; and
(g) T-DNA molecules which, via insertion in endogenous genes coding for BEI protein cause a reduction in the expression of genes coding for BEI protein or the synthesis of inactive BEI proteins.
In a further embodiment, the present invention relates to the use of the above described plant material, which can be used in the inventive process for producing heat-treated foods which have a reduced acrylamide content compared with corresponding conventional heat-treated foods.

The present invention discloses to the use of plant material which, compared with corresponding conventional plant material, has a reduced content of soluble sugars for producing heat-treated foods having a reduced acrylamide content.

The present invention discloses to the use of the above described plant material which can be used in the inventive process for reducing the acrylamide content of heat-treated foods.

The present invention discloses a process for identifying plant material which is suitable for producing heat-treated foods having a reduced acrylamide content, which comprises:
a) determining the content of soluble sugars and/or amino acids in plant material which is suitable for producing heat-treated foods; and
b) selecting such plant material according to process step a) which, compared with corresponding conventional plant material, has a reduced content of soluble sugars and/or amino acids.

### Methods:

### Determination of glucose, fructose and sucrose:

To determine the contents of glucose, fructose and sucrose in potato tubers, small pieces (diameter approximately 10 mm) of potato tubers are frozen in liquid nitrogen and then extracted for one hour at 80°C in 0.5 ml of 80% (vol./vol.) ethanol. After centrifugation (3 min, 3 000 rpm), the supernatant is withdrawn and the deposit is again extracted in 0.5 ml of 80% (vol./vol.) ethanol. This process is repeated. The combined supernatants are used to determine the amount of soluble sugars.
Soluble glucose, fructose and sucrose are determined quantitatively in an assay solution of the following composition:
100 mM imidazole/HCl (pH 6.9)
5 mM MgCl₂
2 mM NAD⁺
1 mM ATP
200 µl of sample
2 units of glucose-6-phosphatedehydrogenase (from Leuconostoc mesenteroides)

The assay solution is incubated at room temperature for 5 min. The sugars are then determined using customary photometric methods by measuring the absorption at 340 nm after the successive addition of
1 500 units of yeast hexokinase (to determine glucose)
2.5 units of yeast phosphoglucoisomerase (to determine fructose)
350 units of yeast β-fructosidase (to determine sucrose) to a reaction volume of 200 µl.

The examples and comparative examples below illustrate the invention:

### Comparative Example 1

### Production of potato crisps and potato chips from potato tubers

To produce potato crisps and potato chips, ripe potato tubers of transgenic potato plants which have a decreased expression of the R1 gene (Lorberth et al., Nature Biotechnology 16, (1998), 473-477) and also potato tubers of potato plants which have a decreased R1 gene expression and in addition a decreased expression of branching enzyme I gene (WO97/11188) were used.
The crisps and chips were further processed immediately after harvest and also after storage at 4°C for differing times.

The tubers were peeled by hand and then sliced in a slicing machine (model Chef200, from Saro Emmerich, Germany) into slices for the production of crisps or cut using a punch (Weisser, Germany) to form chips.

The samples were deep-fat fried in a deep-fat fryer (Frita4, Franke, Frifri aro GmbH, Germany) for differing times using plant fat (Palmaja, Meylip mbH & Co. KG, Germany) at a temperature of 180°C.

The deep-fat fried products were then comminuted and analyzed for their acrylamide content. This was detected using GC/MS or LC/MS-MS after derivatization (Epa method 8032a, U.S. Environmental Protection Agency). This ensures, in addition to a low limited determination, a high selectivity of detection.

In the case of all deep-fat fried samples, it was found that the acrylamide content in the transgenic potato tubers was reduced by at least 15% compared with the acrylamide content of the tubers of the corresponding wild type plants.

### Comparative Example 2

### Determination of the acrylamide content of potato crisps and chips produced from potato tubers having decreased R1- and branching enzyme I - gene expression.

The potato crisps and chips produced according to example 1 were analyzed for their acrylamide content.

Non-genetically-modified plants are termed hereinafter wild type plants. The transgenic potato plants which have a decreased expression of the R1 gene (Lorberth et al., Nature Biotechnology 16, (1998), 473-477) and in addition a decreased branching enzyme I gene expression (see international patent application WO 97/11188) are termed hereinafter 015VL001.

If freshly harvested tubers of potato plants are used for deep-fat frying at 180°C for 3 and 6 minutes, the potato crisps have the following acrylamide content:

**Table 1: Percentage acrylamide content of crisps (produced from potato tubers directly after harvesting). The wild type was set at 100%.**

| | Crisps deep-fat frying time 3 min | Crisps deep-fat frying time 6 min |
|---|---|---|
| Wild type | 100% | 100% |
| 015VL001 | 31% | 49% |

The absolute acrylamide content increases greatly with increasing deep-fat frying time. This is the case not only for crisps from wild type tubers, but also for crisps from transgenic tubers. For both deep-fat frying times, the increase in acrylamide content in the crisps which were produced from the transgenic potato tubers, however, is significantly reduced compared with the crisps of wild type plants. At a deep-fat frying time of 3 min, the acrylamide content in the transgenic crisps is reduced by approximately 70% compared with the wild type crisps. At a deep-fat frying time of 6 min, there is a reduction in acrylamide formation in the transgenic crisps of approximately 50% compared with the wild type.

In a further experiment, potato tubers stored at 4°C were used for producing potato crisps. After harvest, the transgenic tubers and the associated wild type tubers were stored at 4°C for 56 days. Potato crisps and potato chips were produced and deep-fat fried at 180°C for differing times under the conditions described above:

**Table 2: Percentage acrylamide content of crisps (produced from tubers stored at 4°C). The wild type was set at 100%.**

| | Crisps deep-fat frying time 3 min | Crisps deep-fat frying time 6 min |
|---|---|---|
| Wild type | 100% | 100% |
| 015VL001 | 26% | 28% |

The absolute acrylamide content always greatly increases in the products from potatoes stored at 4°C. However, it is shown that the acrylamide content in the crisps made from transgenic potato tubers increases by approximately 70% less compared with the crisps made from corresponding wild type plants, both for a deep-fat frying time of 3 min, and for a deep-fat frying time of 6 min.

In a further experiment, potato chips were produced from cold-stored potato tubers (stored at 4°C for 56 days) as described in example 1 and deep-fat fried. In contrast to the potato crisps, the potato chips were prefried for 30 seconds at 180°C, laid out on kitchen paper, and cooled to room temperature and only then deep-fat fried for the specified time.

**Table 3: Percentage acrylamide content of potato chips (produced from cold-stored tubers). The wild type was set at 100%.**

| | Potato chips deep-fat frying time 3 min | Potato chips deep-fat frying time 6 min |
|---|---|---|
| Wild type | 100% | 100% |
| 015VL001 | 55% | 42% |

The absolute acrylamide contents are lower in the potato chips compared with potato crisps. This is certainly primarily due to the smaller surface area of the potato chips compared with potato crisps per kg of potato. The percentage acrylamide contents, in this product also, show a reduction in the potato chips made from transgenic potato plants by approximately 50% at both deep-fat frying times compared with potato chips made from wild type tubers.

In the context of industrial production of crisps or potato chips, the sliced potatoes were blanched before deep-fat frying. The blanching can take place in a water or steam blancher. The blanching conditions are not fixed values, but vary very greatly depending on the quality of the potatoes used. During the blanching, soluble sugars are partly washed out. This causes more uniform browning of the potato products in deep-fat frying.

To demonstrate that the inventive process also leads to a reduction in the acrylamide formation in the potato products made from transgenic potato plants under changed process conditions, compared with the products from corresponding wild type tubers, the blanching was performed on a laboratory scale by washing the sliced potatoes with hot mains water.

For this purpose, approximately 200 g of potatoes (stored at 4°C for 56 days after harvest) were washed three times, each time using 5 litres of mains water at 45°C, each time for 1.5 minutes. The sliced potatoes were then dried on domestic paper and deep-fat fried at 180°C for 3 minutes as described above:

**Table 4: Percentage acrylamide content of washed crisps (produced from potato tubers). The wild type was set at 100%.**

| | Crisps deep-fat frying time 3 min |
|---|---|
| Wild type | 100% |
| 015VL001 | 21% |

The washing leads to a reduction in acrylamide formation in crisps which were produced from potato tubers of wild type plants by approximately 16% compared with unwashed potato crisps.

Compared with the "washed" crisps which were produced from potato tubers of wild type plants, the "washed" crisps which were produced from potato tubers of the transgenic potato plants have an acrylamide formation which is decreased by approximately 80%.

In a further analysis, the contents of soluble sugars, in particular glucose and/or fructose, were determined compared with the corresponding conventional plant material of wild type plants:

For this purpose the potato tubers were peeled and a sample having a diameter of approximately 0.5 cm sample was cut out using a cork borer (from Roth). From this sample a slice approximately 2 mm thick each time from the start, one quarter and one half from 5 different tubers in each case was combined in a reaction vessel and used to determine soluble sugars.
The determination of the contents of sugars, in particular fructose and glucose, of plant material is known to those skilled in the art and was carried out as described above.

**Table 6: Comparison of the percentage soluble sugar contents of fresh harvested and stored tuber samples based on tubers of the corresponding wild type (100%).**

| | Wild type directly after harvest | 015VL001 directly after harvest | Wild type after storage at 4°C | 015VL001 after storage at 4°C |
|---|---|---|---|---|
| Glucose [µmol/g fresh weight] | 100% | 61% | 100% | 48% |
| Fructose [µmol/g fresh weight] | 100% | 67% | 100% | 53% |
| Sucrose [µmol/g fresh weight] | 100% | 110% | 100% | 69% |

Storage causes a sharp rise in the contents of soluble sugars in wild type plants. The tubers of line 015VL show, directly after harvest, contents of glucose and fructose reduced by approximately 30%-40% compared with wild type plants. After the above described cold storage, there is reduction of glucose or fructose of approximately 50% in the transgenic plants compared with the corresponding wild type plants.

If the content of glucose or fructose is correlated with the acrylamide content in crisps, it is seen that there is a linear correlation between the content of glucose or fructose in the potato tuber and the formation of acrylamide in the deep-fat fried product crisps.

It is has thus been shown for the first time that there is a correlation between the formation of acrylamide in heat-treated foods and the content of soluble sugars of the plant material used to produce the heat-treated food. The effect on reduction of acrylamide formation is much more pronounced than expected.

### Comparative Example 3

### Determination of the acrylamide content of potato crisps and potato chips produced from potato tubers having decreased R1-gene expression.

The potato crisps and potato chips produced according to example 1, which were produced from potato tubers having decreased R1 gene expression, were analyzed for their acrylamide content.

In this case, as already described in example 2, firstly tests were made of differing deep-fat frying times, and also samples which had been differently stored or washed were studied.

The results described in example 2 were confirmed, that is to say potato crisps and potato chips produced from potato tubers having decreased R1 gene expression, likewise show, under the conditions described in more detail in example 2, less acrylamide compared with corresponding products which were produced from potato tubers from corresponding non-genetically-modified wild type plants.

### Example 4

### Production of differing varieties of transgenic potato plants having reduced R1 gene expression

To produce transgenic potato plants having reduced R1 gene expression, the T-DNA of plasmid IR5/29 was transferred to potato plants of cultivars Tomensa, Solara and Bintje, using agrobacteria, as described in Rocha-Sosa et al. (EMBO J. 8, (1989), 23-29).

### Notes on vector IR5/29:

IR5-29 is a derivative of plasmid pGSV71 which contains, inter alia, the sequence of the promoter of the patatin gene B33 from Solanum tuberosum (Rocha-Sosa et al., (1989), see above) and the complete R1-cDNA (Lorberth et al. Nature Biotechnology 16, (1998), 473-477) in the "sense" orientation to the promoter.
pGSV71 is a derivative of plasmid pGSV7, which is derived from the intermediate vector pGSV1. pGSV1 is a derivative of pGSC1700, the construction of which was described by Cornelissen and Vanderwiele ((1989), Nuclear transcriptional activity of the tobacco plastid psbA promotor. Nucleic Acids Research 17: 19-29). pGSV1 was obtained from pGSC1700 by deletion of the carbenicillin resistance gene and deletion of the T-DNA sequences of the TL-DNA region of plasmid pTiB6S3.
pGSV7 contains the replication origin of plasmid pBR322 (Bolivar et al., (1977), Construction and characterization of new cloning vehicles. II. A multipurpose cloning system. Gene, 2: 95-113) and the replication origin of the pseudomonas plasmid pVS1 (Itoh et al., (1984), Genetic and molecular characterization of the Pseudomonas plasmid pVS1. Plasmid 11: 206-220).
pGSV7 also contains the selectable marker gene aadA from the transposon Tn1331 from Klebsiella pneumoniae, which confers resistance to the antibiotics spectinomycin and streptomycin (Tolmasky, (1990), Sequencing and expression of aadA, bla, and tnpR from the multiresistance transposon Tn1331. Plasmid. 24(3): 218-226; Tolmasky and Crosa, (1993), Genetic organization of antibiotic resistance genes (aac(6')-Ib, aadA, and oxa9) in the multiresistance transposon Tn1331. Plasmid. 29 (1): 31-40).
The plasmid pGSV71 was obtained by cloning a chimeric bar gene between the border regions of pGSV7. The chimeric bar gene contains the promoter sequence of the cauliflower mosaic virus for initiating transcription (Odell et al., (1985), Identification of DNA sequences required for activity of the Cauliflower Mosaic Virus 35S promotor. Nature 313:810-812), the bar gene from Streptomyces hygroscopicus (Thompson et al., (1987); Characterization of the herbicide resistance gene bar from Streptomyces hygroscopicus. The EMBO Journal, 6: 2519-2523) and the untranslated 3' region of the nopaline synthase gene of T-DNA of pTiT37 for termination of transcription and polyadenylation. The bar gene confers tolerance towards the herbicide glufosinate ammonium.
The T-DNA contains the following elements in the order cited:
- the left border sequence of the TL-DNA from pTiB6S3 (Gielen et al., (1984), The complete nucleotide sequence of the TL-DNA of the Agrobacterium tumefaciens plasmid pTiAch5. The EMBO J. 3:835-846).
- the promoter of the patatin gene B33 from Solanum tuberosum (Rocha-Sosa et al., 1989, see above) in a sense orientation based on the left border sequence of the TL-DNA
- the complete R1-cDNA (Lorberth et al., (1998), see above) in a sense orientation based on the patanin promoter
- the polyadenylation signal (3' end) of the octopine synthase gene (gene 3) of the T-DNA of the Ti plasmid pTiACH5 (Gielen et al., (1984), see above) in a sense orientation based on the left border sequence of the TL-DNA
- the Taql fragment of the non-translated 3' end of the nopaline synthase gene (3' nos) from the T-DNA of plasmid pTiT37 (Depicker et al., (1982), Nopaline synthase: transcript mapping and DNA sequence. Journal of molecular and applied Genetics 1: 561-573) in an antisense orientation based on the left border sequence of the TL-DNA
- the coding sequence of the phosphinothricin resistance gene (bar) from Streptomyces hygroscopicus (Thompson et al. (1987, see above) in an antisense orientation based on the left border sequence of the TL-DNA. The two terminal codons at the 5' end of the bar wild type gene were replaced by the codons ATG and GAC.
- the P35S3 promoter region of cauliflower mosaic virus (Odell et al., (1985), see above) in an antisense orientation based on the left border sequence of the TL-DNA
- the right border sequence of the TL-DNA from plasmid pTiB6S3 (Gielen et al., (1984), see above.

After the various potato cultivars had been transformed, Western blot analysis (Lorberth et al., Nature Biotechnology 16, (1998), 473-477) was used to identify, for each of the cultivars, various lines whose tubers had a markedly reduced amount of R1 protein, owing to a cosuppression effect.

The plants of cultivar Tomensa obtained by transformation using plasmid IR5/29 were termed 093IR plants, those of cultivar Solara were termed 095IR plants, and those of cultivar Bintje were termed 092IR plants.

Potato tubers from lines 093IR360, 095IR049 and 092IR002 were used to produce potato chips (example 5).

### Comparative Example 5

### Determination of the acrylamide content of potato chips which had been produced from different varieties of potato tubers having decreased R1 gene expression

Freshly harvested potato tubers of the plants produced according to example 4 were processed to potato chips in accordance with example 1 and pre-deep-fat fried according to example 2 for 30 seconds at 180°C, laid out on kitchen paper and cooled to room temperature and then deep-fat fried at 180°C for 3 minutes.

The potato chips produced had the following acrylamide contents:

**Tab.1: Percentage acrylamide content of potato chips (produced from potato tubers directly after harvest). Each corresponding wild type was set at 100%.**

| | Wild type Tomensa | 093IR360 | Wild type Solara | 095IR049 | Wild type Bintje | 092IR002 |
|---|---|---|---|---|---|---|
| Acrylamide content [%] | 100% | 62% | 100% | 56% | 100% | 64% |

The absolute acrylamide contents of the potato chips produced in part vary considerably between the cultivars used. This is primarily due to the differing absolute values of soluble sugars. For instance potato chips from cultivar Solara, for example, exhibited not only the highest acrylamide contents but also the highest soluble sugar contents.

The relative acrylamide contents of the potato chips, however, showed for all transgenic cultivars used a considerable reduction in the amount of acrylamide by approximately 40-50% compared with potato chips which had been produced from wild type tubers.

In a further analysis, the contents of soluble sugars, in particular glucose, fructose and sucrose, were determined in the potato tubers from the various cultivars:

For this purpose the potato tubers were peeled in accordance with example 2 and using a cork borer (from Roth), a sample of diameter approximately 0.5 mm was cut out. From this cork borer sample, an approximately 2 mm thick slice was taken in each case from the start, one quarter and half way, from each of 5 different tubers and combined in a reaction vessel and used for determining soluble sugars.

The contents of sugars, in particular fructose and glucose, of plant material were determined as described above.

As mentioned above, the absolute values of soluble sugars vary greatly between the cultivars studied. Cultivar Solara shows the highest glucose, fructose and sucrose contents. Tomensa shows the lowest glucose and fructose contents, and Bintje the lowest sucrose contents. Tubers from line 093IR360, directly after harvest, show glucose and sucrose contents reduced by approximately 30-40% compared with the corresponding wild type plants. Tubers of line 095IR049, directly after harvest, show glucose and fructose contents reduced by approximately 10-30% compared with wild type plants.

If the total glucose and/or fructose content is correlated with the acrylamide content in potato chips, it may be seen that there is a linear correlation between the glucose and/or fructose content and the formation of acrylamide in the potato chips.

It was thus confirmed for various cultivars that the use of potato plants having decreased R1 gene expression permits the production of heat-treated foods, in particular potato chips, which are distinguished by a markedly reduced acrylamide content compared with corresponding heat-treated foods which are produced from corresponding non-genetically-modified wild type plants.

### Comparative Example 6

### Determination of the acrylamide content of potato chips produced from stored potato tubers of differing varieties of reduced R1 - gene expression

Potato tubers stored at 4°C for 73 days from the plants produced in accordance with Example 4 were processed to potato chips in accordance with Example 1 and deep-fat prefried at 180°C for 30 seconds in accordance with Example 2, placed on kitchen paper and cooled to room temperature, and then deep-fat fried at 180°C for 3 minutes.

The potato chips produced had the following acrylamide contents:

**Table 1; Percentage acrylamide content in potato chips (produced from potato tubers stored at 4°C). The corresponding respective wild types were set at 100%.**

| | Wild type Tomensa | 093IR360 | Wild type Solara | 095IR049 | Wild type Bintje | 092IR002 |
|---|---|---|---|---|---|---|
| Acrylamide content [%] | 100% | 55% | 100% | 70% | 100% | 58% |

The absolute acrylamide content in the products from potatoes stored at 4°C always increases markedly. However, it is found for the varieties listed here, also, that the acrylamide content in the potato chips from transgenic potato tubers increases by approximately 30-45% less compared with the potato chips from corresponding wild type plants.

In a further experiment, potato tubers of the cultivar Désirée having reduced R1-gene expression (Lorberth et al., Nature Biotechnology 16, (1998), 473-477) were stored at 4°C for 73 days. Potato chips and crisps were produced as described in Example 1. Crisps were deep-fat fried for 3 minutes at 180°C as described in Example 2. In contrast to the potato crisps, potato chips were deep-fat pre-fried at 180°C for 30 seconds, placed on kitchen paper and cooled to room temperature and then deep-fat fried for 3 minutes.

The potato chips and crisps produced had the following acrylamide contents:

**Table 2: Percentage acrylamide content of potato chips and crisps (produced from tubers stored at 4°C). The wild type was set at 100%.**

| | Potato chips | Crisps |
|---|---|---|
| | deep-fat frying time | deep-fat frying time |
| | 3 min | 3 min |
| Wild type | 100% | 100% |
| 009VL045 | 56% | 33% |

The absolute acrylamide content in the products from potatoes stored at 4°C always increases markedly. However, it is also found in this experiment that the acrylamide content increases by approximately 70% less in the crisps made from transgenic potato tubers compared with the crisps made from the corresponding wild type plants.

In a further experiment, potato tubers of cultivar Désirée of reduced R1-gene expression (Lorberth et al., Nature Biotechnology 16, (1998), 473-477) were stored at 8°C for 73 days. These stored potato tubers were processed into potato chips in accordance with Example 1 and deep-fat pre-fried for 30 seconds at 180°C in accordance with Example 2, placed on kitchen paper and cooled to room temperature and then deep-fat fried at 180°C for 3 minutes.

The potato chips produced had the following acrylamide contents:

**Table 3: Percentage acrylamide content of potato chips (produced from tubers stored at 8°C). The wild type was set at 100%.**

| | Potato chips deep-fat frying time |
|---|---|
| | 3 min |
| Wild type | 100% |
| 009VL045 | 52% |

The absolute acrylamide content in the products from potato tuber stored at 8°C does not increase as greatly as in the case of potato tubers stored at 4°C. However, in this experiment also, it is found that the acrylamide content in the potato chips from transgenic potato tubers increases by approximately 48% less compared with potato chips made from corresponding wild type plants.

## Claims

1. Process for reducing the acrylamide content of heat-treated foods compared with corresponding conventional heat-treated foods comprising:
(a) selecting genetically modified plant material originating from potato plants, wherein the genetic modification leads to a reduction in the content of soluble sugars, compared with corresponding non-genetically modified plant material from wild type plants, and wherein said genetic modification leads to a reduction in the activity of one or more endogenous R1 proteins occurring in the plant cell compared with corresponding plant cells of wild type plants which have not been genetically modified;
(b) processing the said plant material to give a food; and
(c) heat-treating the food produced in process step b), wherein the food is heat treated by grilling, roasting, extruding, baking or microwave heating.

2. Process according to Claim 1, in which the said acrylamide content is reduced by at least 15% compared with the acrylamide content of corresponding conventional heat-treated foods.

3. Process according to Claim 1, in which the said acrylamide content is reduced by at least 30% compared with the acrylamide content of corresponding conventional heat-treated foods.

4. Process according to one of Claims 1 to 3, in which the said heat treatment is carried out at temperatures of at least 100°C.

5. Process according to one of the preceding claims, in which the said genetic modification is the introduction of one or more foreign nucleic acid molecules, the presence and/or expression of which leads to the reduction in the activity of one or more endogenous R1 proteins occurring in the plant cell compared with corresponding plant cells of wild type plants which have not been genetically modified.

6. Process according to Claim 5, in which the said foreign nucleic acid molecules are selected from the group consisting of
(a) DNA molecules which code for at least one antisense RNA causing a reduction in expression of endogenous genes which code for R1 proteins;
(b) DNA molecules which, via a cosuppression effect, lead to reduction of the expression of endogenous genes coding for R1 proteins;
(c) DNA molecules which code for at least one ribozyme which cleaves in a specific manner transcripts of endogenous genes coding for R1 proteins;
(d) nucleic acid molecules which are introduced by means of in vivo mutagenesis and lead to a mutation or insertion of a heterologous sequence in genes coding for endogenous R1 proteins, the mutation or insertion causing a reduction in the expression of the said genes or the synthesis of inactive R1 proteins;
(e) DNA molecules which simultaneously code for at least one antisense RNA and at least one sense RNA, the said antisense RNA and the said sense RNA forming a double-stranded RNA molecule which causes a reduction in the expression of endogenous genes coding for R1 proteins;
(f) DNA molecules which contain transposons, the integration of the transposon sequences leading to a mutation or an insertion in endogenous genes coding for R1 proteins which causes a reduction in the expression of the said genes or the synthesis of inactive R1 proteins; and
(g) T-DNA molecules which, via insertion in endogenous genes coding for R1 protein cause a reduction in the expression of genes coding for R1 protein or the synthesis of inactive R1 proteins.

7. Process according to one of claims 1-6, in which the said heat-treated foods are selected from the group consisting of potato chips, potato crisps, parfried potato chips, mashed potato and potato sticks.

## Patentansprüche

1. Verfahren zur Verringerung des Acrylamidgehaltes von wärmebehandelten Lebensmitteln im Vergleich zu entsprechenden herkömmlichen wärmebehandelten Lebensmitteln umfassend:
(a) die Auswahl von genetisch modifiziertem pflanzlichen Material, das aus Kartoffelpflanzen stammt, wobei die genetische Modifikation zu einer Verringerung des Gehaltes an löslichen Zuckern führt im Vergleich zu entsprechendem nicht genetisch modifizierten pflanzlichen Material von Wildtyp-Pflanzen, und wobei die besagte genetische Modifikation zu einer Verringerung der Aktivität eines oder mehrerer in der Pflanzenzelle vorkommender endogener R1-Proteine führt im Vergleich zu entsprechenden nicht genetisch modifizierten Pflanzenzellen von Wildtyp-Pflanzen;
(b) die Verarbeitung des besagten pflanzlichen Materials zu einem Lebensmittel; und
(c) die Wärmebehandlung des in Verfahrensschritt b) erzeugten Lebensmittels,
wobei das Lebensmittel durch Grillen, Braten, Extrudieren, Backen oder Mikrowellenerwärmung wärmebehandelt wird.

2. Verfahren nach Anspruch 1, worin besagter Acrylamidgehalt um mindestens 15% verringert ist im Vergleich zum Acrylamidgehalt von entsprechenden herkömmlichen wärmebehandelten Lebensmitteln.

3. Verfahren nach Anspruch 1, worin besagter Acrylamidgehalt um mindestens 30% verringert ist im Vergleich zum Acrylamidgehalt von entsprechenden herkömmlichen wärmebehandelten Lebensmitteln.

4. Verfahren nach einem der Ansprüche 1 bis 3, worin die besagte Wärmebehandlung bei Temperaturen von mindestens 100°C erfolgt.

5. Verfahren nach einem der vorangehenden Ansprüche, worin die besagte genetische Modifikation die Einführung eines oder mehrerer fremder Nucleinsäuremoleküle ist, deren Vorhandensein und/oder Expression zur Verringerung der Aktivität eines oder mehrerer in der Pflanzenzelle vorkommender endogener R1-Proteine führt im Vergleich zu entsprechenden nicht genetisch modifizierten Pflanzenzellen von Wildtyp-Pflanzen.

6. Verfahren nach Anspruch 5, worin die besagten fremden Nucleinsäuremoleküle ausgewählt sind aus der Gruppe bestehend aus
(a) DNA-Molekülen, die mindestens eine antisense-RNA codieren, welche eine Verringerung der Expression von endogenen Genen bewirkt, die R1-Proteine codieren;
(b) DNA-Molekülen, die über einen Cosuppressionseffekt zur Verringerung der Expression von endogenen Genen führen, die R1-Proteine codieren;
(c) DNA-Molekülen, die mindestens ein Ribozym codieren, das spezifisch Transkripte von endogenen Genen spaltet, die R1-Proteine codieren;
(d) Nucleinsäuremolekülen, die mittels in vivo-Mutagenese eingeführt werden und die zu einer Mutation oder einer Insertion einer heterologen Sequenz in endogenen R1-Proteinen codierenden Genen führen, wobei die Mutation oder Insertion eine Verringerung der Expression besagter Gene oder die Synthese von inaktiven R1-Proteinen bewirkt;
(e) DNA-Molekülen, die simultan mindestens eine antisense-RNA und mindestens eine sense-RNA codieren, wobei die besagte antisense-RNA und besagte sense-RNA ein doppelsträngiges RNA-Molekül ausbilden, das eine Verringerung der Expression von endogenen Genen bewirkt, die R1-Proteine codieren;
(f) DNA-Molekülen, die Transposons enthalten, wobei die Integration der Transposonsequenzen zu einer Mutation oder einer Insertion in R1-Proteinen codierenden endogenen Genen führt, was eine Verringerung der Expression besagter Gene oder die Synthese von inaktiven R1-Proteinen bewirkt; und
(g) T-DNA Molekülen, die durch Insertion in R1-Protein codierende endogene Gene eine Verringerung der Expression von R1-Protein codierenden Genen oder die Synthese von inaktiven R1-Proteinen bewirken.

7. Verfahren nach einem der Ansprüche 1-6, worin die besagten wärmebehandelten Lebensmittel ausgewählt sind aus der Gruppe bestehend aus Pommes Frites, Kartoffelchips, vorfrittierten Pommes Frites, Kartoffelbrei, und Kartoffelsticks.

## Revendications

1. Procédé de réduction de la teneur en acrylamide d'aliments ayant subi un traitement thermique, par comparaison avec des aliments classiques correspondants ayant subi un traitement thermique, comprenant
(a) la sélection d'un matériel végétal génétiquement modifié, provenant de plants de pomme de terre, la modification génétique conduisant à une réduction de la teneur en sucres solubles par comparaison avec un matériel végétal correspondant, non-génétiquement modifié, provenant de plants de type sauvage, et ladite modification génétique conduisant à une réduction de l'activité d'une ou plusieurs protéines R1 endogènes apparaissant dans la cellule végétale, par comparaison avec des cellules végétales correspondantes provenant de plants de type sauvage qui n'ont pas été génétiquement modifiés ;
(b) le traitement dudit matériel végétal pour obtenir un aliment ; et
(c) le traitement thermique de l'aliment produit dans le procédé de l'étape b),
l'aliment étant traité thermiquement par grillade, rôtissage, extrusion, cuisson au four ou chauffage aux micro-ondes.

2. Procédé selon la revendication 1, dans lequel ladite teneur en acrylamide est réduite d'au moins 15 % par comparaison d'avec la teneur en acrylamide d'aliments classiques correspondants ayant subi un traitement thermique.

3. Procédé selon la revendication 1, dans lequel ladite teneur en acrylamide est réduite d'au moins 30 % par comparaison avec la teneur en acrylamide d'aliments classiques correspondants ayant subi un traitement thermique.

4. Procédé selon l'une des revendications 1 à 3, dans lequel ledit traitement thermique est mis en oeuvre à des températures d'au moins 100°C.

5. Procédé selon l'une des revendications précédentes, dans lequel ladite modification génétique est l'introduction d'une ou plusieurs molécules d'acides nucléiques étrangers, dont la présence et/ou l'expression conduit à la réduction de l'activité d'une ou plusieurs protéines R1 endogènes apparaissant dans la cellule végétale, par comparaison avec des cellules végétales correspondantes provenant de plants de type sauvage, qui n'ont pas été génétiquement modifiés.

6. Procédé selon la revendication 5, dans lequel lesdites molécules d'acides nucléiques étrangers sont choisies dans le groupe consistant en :
(a) des molécules d'ADN qui codent pour au moins un ARN antisens, provoquant une réduction de l'expression de gène endogènes qui codent pour des protéines R1 ;
(b) des molécules d'ADN qui, par l'intermédiaire d'un effet de cosuppression, conduisent à une réduction de l'expression de gènes endogènes codant pour des protéines R1 ;
(c) des protéines d'ADN qui codent pour au moins un ribozyme, qui d'une manière spécifique clivent des produits de transcription de gènes endogènes codant pour des protéines R1 ;
(d) des molécules d'acides nucléiques qui sont introduites au moyen d'une mutagenèse in vivo et qui conduisent à une mutation ou à une insertion d'une séquence hétérologue dans des gènes codant pour des protéines R1 endogènes, la mutation ou l'insertion provoquant une réduction de l'expression desdits gènes ou de la synthèse de protéines R1 inactives ;
(e) des molécules d'ADN qui simultanément codent pour au moins un ARN antisens et pour au moins un ARN sens, ledit ARN antisens et ledit ARN sens formant une molécule d'ARN double brin, qui provoque une réduction de l'expression de gènes endogènes codant pour des protéines R1 ;
(f) des molécules d'ADN qui contiennent des transposons, l'intégration des séquences de transposons conduisant à une mutation ou à une insertion dans des gènes endogènes codant pour des protéines R1, ce qui provoque une réduction de l'expression desdits gènes ou de la synthèse de protéines R1 inactives ; et
(g) des molécules d'ADN-T qui, par l'intermédiaire d'une insertion dans des gènes endogènes codant pour une protéine RI, provoquent une réduction de l'expression de gènes codant pour une protéine R1 ou de la synthèse de protéines R1 inactives.

7. Procédé selon l'une des revendications 1 à 6, dans lequel lesdits aliments ayant subi un traitement thermique sont choisis dans le groupe consistant en les pommes chips, les croustilles de pomme de terre, les chips de pomme de terre partiellement frites, les pommes de terre en purée et les bâtonnets de pomme de terre.
